# EUROPEAN PATENT SPECIFICATION

(11) **EP 3 904 947 B1**
(45) Date of publication and mention of the grant of the patent: **17.06.2026**
(21) Application number: 20172212.1
(22) Date of filing: 29.04.2020
(51) Int. Cl.: G02B 27/01

(54) **HEAD-MOUNTED DISPLAY SYSTEM**
KOPFMONTIERTES ANZEIGESYSTEM
SYSTÈME D'AFFICHAGE FACIAL

(43) Date of publication of application: 03.11.2021
(73) Proprietor: BHS Technologies GmbH, 6020 Innsbruck (AT)
(72) Inventor: CAPELLI, Mark, 6020 Innsbruck (AT); SANTEK, Michael, 6091 Götzens (AT)
(74) Representative: Prüfer & Partner mbB Patentanwälte · Rechtsanwälte

(56) References cited:
- WO-A1-2015/148323
- US-A1- 2004 212 776
- US-A1- 2012 050 143
- US-A1- 2017 007 351
- US-B1- 9 213 185

## Description

The invention relates to head-mounted display systems. Such systems are frequently used in medical applications wherein an operator requires the display of images, for example, of an operating field which requires visual magnification or is visually not sufficiently accessible.

Usually a display portion of a head-mounted display system is configured to cover an operator's whole viewing field to avoid any distractions. However, it may be necessary to take a look on the surrounding scene to gather further information not displayed by the display portion or the like. In such event, the operator has to remove the display portion from the viewing field, e.g. by manually repositioning the head-mounted display or at least the display portion out of sight. This does not only require to release one hand from the operating field and eventually the surgical instrument but also may be subject to sterility issues.

Even though some head-mounted displays provide a semi-transparent display portion to superimpose the direct view on the surrounding scene with predetermined information, such head-mounted displays do not qualify to display images of an operating field in a sufficient unambiguous image quality to perform a surgery.

US9213185B1 discloses a head-mounted display, HMD, in which the position and size of images can be adjusted within the HMD display based upon movements of the HMD.

In view of the above, it is an object of the present invention to provide an improved head-mounted display which enables an operator to receive displayed information ergonomically while still being able to observe the periphery surrounding scene.

The problem is solved by a head-mounted display system according to claim 1. Further aspect of the present invention are subject of the dependent claims.

According to the present invention, a head-mounted display system comprises at least one head mounted display providing a display portion, a carrier member to be worn by an operator to support the head-mounted display, wherein the head-mounted display system is configured to display information to the operator on the display portion being positioned in a direct viewing field of the operator, and wherein the display portion is configured such that it provides a peripheral view on the surrounding scene.

The direct viewing field of the operator corresponds to an area viewed by the operator without significant eye movement. In other words, the direct viewing field corresponds to an ergonomic main view. The surrounding field is still visible by moving an eye to a periphery field. As the operator mainly focuses on the displayed images during surgery, gathering short views on a surrounding scene with a non-ergonomic viewing angle is acceptable.

In general, a head-mounted display may provide one display portion for one eye or for both eyes or one display portion for each eye. However, the principles of the present invention are applicable to each of said configurations.

Further, the display portion is configured to be movable with respect to the carrier member.

The display portions may be moved in individual positions according to the operator's preferences with respect to the viewing angle for the surrounding scene. Furthermore, the position of the display portion may be changed over a procedure due to other preferences. The display portion may also be moved in a position covering the whole viewing field of the operator under some circumstances while being able to be repositioned to allow observation of the surrounding scene in parallel.

Additionally, the head-mounted display system further comprises a tracking system for an operator's head and/or eye movement and/or a gesture to control movement of the display portion.

The movement of the display portion may be therefore controlled without any manual impact. Accordingly, the control of the display portion is not subject to sterility issues. Tracking a head and/or eye movement further provides the advantage of enabling the operator to keep the hands on the surgical instruments or the like while still being able to perform control tasks.

In some embodiments, the display portion is dimensioned smaller than a viewing field defined by all scanning angles of an operator's eye of the operator.

The viewing filed is greater than the direct viewing field as it comprises all view angles. Due to the display portion being smaller than the viewing field, the operator may observe the surrounding field in some periphery of the viewing field.

The dimensions of the display portion relate to the display area in terms of the width and height of the display portion. The dimensions may be defined by a static height and widths or may be adaptable based on individual viewing fields of an operator. Accordingly, the size of the display portion of the head-mounted display may be adaptable.

Preferably, the display portion is dimensioned smaller than the direct viewing field of the operator.

Thus, the operator may not only observe the surrounding scene with extreme viewing angles but also in parallel with the direct view.

Alternatively or in addition, the display portion is configured to provide surface units that can be switched between displaying information in a displaying mode to transparent in a transparent mode.

Accordingly, surface units of the displaying portions not required to display information during a specific procedure may be switched to the transparent mode. As a result, the view on the surrounding scene can be temporarily enhanced or adapted to current needs.

In some embodiments, the tracking system for an operator's head and/or eye movement and/or a gesture is further configured to control the mode of the display units.

The mode of the display units may be therefore controlled without any manual impact.

Advantageously, the movement of the display portion is restricted to maintain the display portion at least partially in the direct viewing field of the operator.

As a result, the display portion and therefore, for example, images of the operating field, may not unintentionally be set aside. In other words, the restriction ensures visibility of the display portion at any time the head-mounted display is in an operating position.

In some embodiments, the head-mounted display system comprises two display portions, each being assigned to on eye of the operator, wherein each of the display portions is configured to be controlled independently.

Due to an independent control of each of the display portions, the degrees of freedom to adapt the display portions to individual needs are enhanced. For example, an operator may prefer to observe the surrounding scene only with one eye or would like to view more of the surrounding scene on one eye than one the other.

In some embodiments, the head-mounted display is configured to cover an operator's face.

Accordingly, the head-mounted display is not only configured to display information to an operator but also to protect an operator's face from any substances that may cause any health risk by being spread from an operating field and vice versa.

### Brief Description of the Drawings

- Fig.1: illustrates a direct viewing filed and a viewing field with respect to an operator's eye;
- Fig. 2: is a schematic perspective view on a head-mounted display system according to first embodiment; and
- Fig. 3: is a schematic perspective view on a head-mounted display system according to second embodiment.

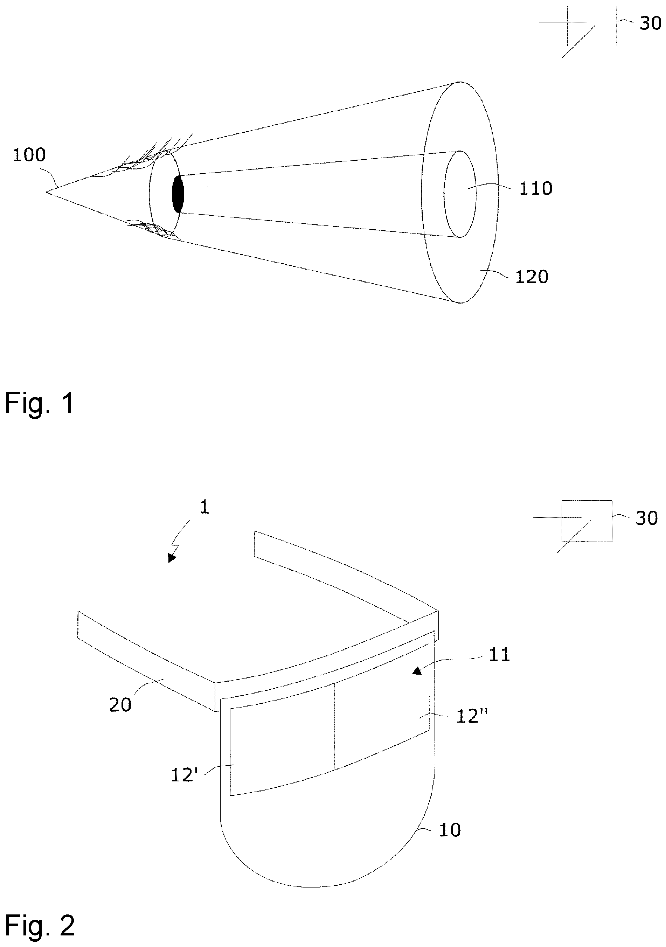

Fig. 1 illustrates a direct viewing field 110 and a viewing field 120 with respect to an operator's eye 100. The direct viewing field 110 is defined as the area viewed by the operator's eye 100 without significant eye movement in a normal viewing angle or in an ergonomic main viewing direction, respectively. Such main viewing direction may be a direction substantially perpendicular to a display portion or may be adaptable with respect to individual preferences and/or specific applications. The direct viewing field 110 is surrounded by the viewing field 120, which is defined as the area observable by a movement of the operator's eye 100 over all scanning angles.

Fig. 1 also shows a tracking system 30 to track a movement of the operator's eye to control, for example, a movement of a display portion 11, 11', 11" of a head-mounted display system 1, 1', as described later.

Fig. 2 is a schematic perspective view on a head-mounted display system 1 according to a first embodiment. The head-mounted display system 1 comprises a head-mounted display 10 affixed to a carrier 20. The head mounted display 10 provides a display portion 11 to display information to an operator. The information to be displayed may be a medical image of a medical imaging device transferred to the display portion 11.

The head-mounted display 10 is dimensioned to not only provide the display portion 11 in a direct viewing field 110 but also to cover the operator's face. Accordingly, the head-mounted display 10 provides a barrier for any substances in the environment that may affect the health of the operator. Similar, any substances contained in the air exhaled by the operator are shielded from an operating field.

The display portion 11 of the first embodiment is positioned in the direct viewing field 110 of the operator but dimensioned to be smaller than the direct viewing field 110. Accordingly, the operator may view the displayed information and the surrounding scene in parallel. Alternatively, the display portion is at least smaller than the viewing field so that the operator may still observe the surrounding scene by changing the viewing angle. Such peripheral view may be at least partially through the remaining head-mounted display in the periphery of the display portion 11 with the remaining head-mounted display being transparent. Alternatively or in addition, the peripheral view does not cross the head-mounted display 10.

Further, the display portion 11 comprises two surface units 12', 12" which may be switched independently between a mode in which information is displayed and a transparent mode. Accordingly, the display portion 11 in terms of an active display area may be adapted. According to the claimed invention, the head-mounted display 10 is beconfigured to be moveable with respect to the carrier member 20 to increase or decrease the visibility of the surrounding scene. Such movement is controlled by the tracking system 30. For example, if the tracking system 30 detects an eye movement such that the display portion 11 cannot be observed any longer, the display portion 11 may be moved to still being partially visible. Therefore, severe information, like the actual status of an operating field or biometric information, are continuously accessible. As another example, the tracking system 30 may be configured move the display portion 11 out of sight for defined viewing angles.

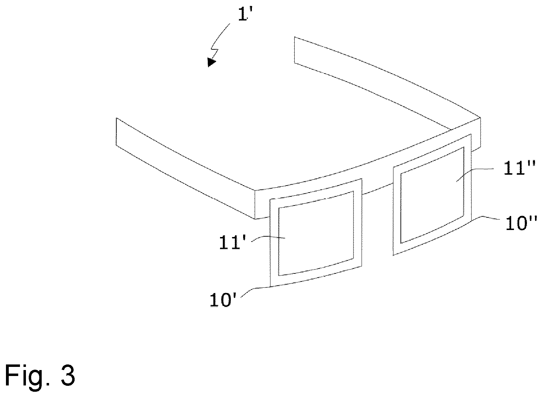

Fig. 3 is a schematic perspective view on a head-mounted display system 1' according to second embodiment. The head-mounted display system 1' of the second embodiment differs from the head-mounted display system 1 of the first embodiment in that the head-mounted display system 1' provides two head-mounted displays 10', 10". Each head-mounted display 10, 10" is assigned to one operator's eye 100, respectively, and therefore to one direct viewing filed 110 and viewing field 120, respectively, and comprises one display portion 11', 11". The display portions 11', 11" are controlled independently. Accordingly, the display portions 11', 11" may be moved independently from another or surface units as the surface units 12', 12" according to Fig. 2 provided for each of the display portions 11', 11" may be switched between a displaying mode and a transparent mode independently from such switching according to the respective other display portion.

It is to be noted that the given examples are specific embodiments and not intended to restrict the scope of protection given in the claims. In particular, single features of one embodiment may be combined with another embodiment as long as such combination is not reasonably excluded.

### List of reference signs

- 1, 1': head-mounted display system
- 10, 10', 10": head-mounted display
- 11, 11', 11": display portion
- 12', 12": surface unit
- 20: carrier member
- 30: tracking system
- 100: operator's eye
- 110: direct viewing field
- 120: viewing field

## Claims

1. Head-mounted display system (1, 1'), comprising:
at least one head mounted display (10, 10', 10") providing a display portion (11, 11', 11"),
a carrier member (20) to be worn by an operator to support the head-mounted display (10, 10', 10"),
wherein the head-mounted display system (1, 1') is configured to display information to the operator on the display portion (11, 11', 11") being positioned in a direct viewing field (110) of the operator; wherein
the display portion (11, 11', 11") is configured such that it provides a peripheral view of the surrounding scene,
**characterized in that**
the at least one head-mounted display (10, 10', 10") is configured to be movable with respect to the carrier member (20); and
wherein the head-mounted display system (1, 1') further comprises a tracking system (30) for an operator's head and/or eye movement and/or a gesture to control the movement of the at least one head-mounted display (10, 10', 10") to increase or decrease the visibility of the surrounding scene.

2. The head-mounted display system (1, 1') according to claim 1, wherein the display portion (11, 11', 11 ") is dimensioned smaller than a viewing field (120) defined by all scanning angles of an operator's eye (100) of the operator.

3. The head-mounted display system (1, 1') according to claim 1 or 2, wherein the display portion (11, 11', 11") is dimensioned smaller than the direct viewing field (110) of the operator.

4. The head-mounted display system (1, 1') according to any one of the preceding claims, wherein the display portion (11, 11', 11") is configured to provide surface units (12', 12") that can be switched between displaying information in a displaying mode to transparent in a transparent mode.

5. The head-mounted display system (1, 1') according to claim 4, wherein the mode is controlled by the tracking system (30) for an operator's head and/or eye movement and/or a gesture is further configured to control the mode.

6. The head-mounted display system (1, 1') according to any one of the preceding claims, wherein the movement of the display portion (11, 11', 11") is restricted to maintain the display portion (11, 11', 11") at least partially in the direct viewing field (110) of the operator.

7. The head mounted display system (1') according to any one of the preceding claims, wherein the head-mounted display system (1') comprises two display portions (11', 11 "), each being assigned to one eye (100) of the operator, wherein each of the display portions (11', 11") is configured to be controlled independently.

8. The head-mounted display system (1) according to any one of the preceding claims, wherein the head-mounted display (10, 10', 10") is configured to cover an operator's face.

## Patentansprüche

1. Kopfmontiertes Anzeigesystem (1, 1'), umfassend:
mindestens eine kopfmontierte Anzeige (10, 10', 10"), die einen Anzeigeabschnitt (11, 11', 11'') bereitstellt,
ein Trägerelement (20), das von einem Bediener zu tragen ist, um die kopfmontierte Anzeige (10, 10', 10") zu tragen,
wobei das kopfmontierte Anzeigesystem (1, 1') dazu konfiguriert ist, dem Bediener Informationen auf dem Anzeigeabschnitt (11, 11', 11") anzuzeigen, der in einem direkten Sichtfeld (110) des Bedieners positioniert ist, wobei
der Anzeigeabschnitt (11, 11', 11") so konfiguriert ist, dass er eine periphere Ansicht der umgebenden Szene bereitstellt,
**dadurch gekennzeichnet, dass**
die mindestens eine kopfmontierte Anzeige (10, 10', 10") dazu konfiguriert ist, in Bezug auf das Trägerelement (20) beweglich zu sein, und
wobei das kopfmontierte Anzeigesystem (1, 1') ferner ein Verfolgungssystem (30) für die Kopf- und/oder Augenbewegung und/oder eine Geste eines Bedieners umfasst, um die Bewegung der mindestens einen kopfmontierten Anzeige (10, 10', 10") so zu steuern, dass die Sichtbarkeit der umgebenden Szene erhöht oder verringert wird.

2. Kopfmontiertes Anzeigesystem (1, 1') gemäß Anspruch 1, wobei der Anzeigeabschnitt (11, 11', 11") kleiner als ein Sichtfeld (120) bemessen ist, das durch alle Abtastwinkel eines Bedienerauges (100) des Bedieners definiert ist.

3. Kopfmontiertes Anzeigesystem (1, 1') gemäß Anspruch 1 oder 2, wobei der Anzeigeabschnitt (11, 11', 11") kleiner als das direkte Sichtfeld (110) des Bedieners dimensioniert ist.

4. Kopfmontiertes Anzeigesystem (1, 1') gemäß einem der vorhergehenden Ansprüche, wobei der Anzeigeabschnitt (11, 11', 11") dazu konfiguriert ist, Oberflächeneinheiten (12', 12") bereitzustellen, die zwischen dem Anzeigen von Informationen in einem Anzeigemodus zu transparent in einem transparenten Modus umgeschaltet werden können.

5. Kopfmontiertes Anzeigesystem (1, 1') gemäß Anspruch 4, wobei der Modus durch das Verfolgungssystem (30) für die Kopf- und/oder Augenbewegung und/oder eine Geste eines Bedieners gesteuert wird und/oder ferner dazu konfiguriert ist, den Modus zu steuern.

6. Kopfmontiertes Anzeigesystem (1, 1') gemäß einem der vorhergehenden Ansprüche, wobei die Bewegung des Anzeigeabschnitts (11, 11', 11") eingeschränkt ist, um den Anzeigeabschnitt (11, 11', 11") zumindest teilweise in dem direkten Sichtfeld (110) des Bedieners zu halten.

7. Kopfmontiertes Anzeigesystem (1') gemäß einem der vorhergehenden Ansprüche, wobei das kopfmontierte Anzeigesystem (1') zwei Anzeigeabschnitte (11', 11") umfasst, die jeweils einem Auge (100) des Bedieners zugeordnet sind, wobei jeder der Anzeigeabschnitte (11', 11") dazu konfiguriert ist, unabhängig gesteuert zu werden.

8. Kopfmontiertes Anzeigesystem (1) gemäß einem der vorhergehenden Ansprüche, wobei die kopfmontierte Anzeige (10, 10', 10") dazu konfiguriert ist, das Gesicht eines Bedieners zu bedecken.

## Revendications

1. Système d'affichage monté sur la tête (1, 1'), comprenant :
au moins un affichage monté sur la tête (10, 10', 10") fournissant une portion d'affichage (11, 11', 11"),
un élément porteur (20) destiné à être porté par un opérateur pour supporter l'affichage monté sur la tête (10, 10', 10"),
où le système d'affichage monté sur la tête (1, 1') est configuré pour afficher des informations à l'opérateur sur la portion d'affichage (11, 11', 11") qui est positionnée dans un champ de vision direct (110) de l'opérateur, où
la portion d'affichage (11, 11', 11") est configurée de telle sorte qu'elle fournit une vue périphérique de la scène environnante,
**caractérisé en ce que**
l'au moins un affichage monté sur la tête (10, 10', 10") est configuré pour être déplaçable par rapport à l'élément porteur (20), et
où le système d'affichage monté sur la tête (1, 1') comprend en outre un système de suivi (30) pour un mouvement de la tête et/ou des yeux d'un opérateur et/ou un geste pour contrôler le mouvement de l'au moins un affichage monté sur la tête (10, 10', 10") pour augmenter ou diminuer la visibilité de la scène environnante.

2. Système d'affichage monté sur la tête (1, 1') selon la revendication 1, où la portion d'affichage (11, 11', 11") est dimensionnée plus petite qu'un champ de vision (120) défini par tous les angles de balayage d'un œil d'opérateur (100) de l'opérateur.

3. Système d'affichage monté sur la tête (1, 1') selon la revendication 1 ou 2, où la portion d'affichage (11, 11', 11") est dimensionnée plus petite que le champ de vision direct (110) de l'opérateur.

4. Système d'affichage monté sur la tête (1, 1') selon l'une quelconque des revendications précédentes, où la portion d'affichage (11, 11', 11") est configurée pour fournir des unités de surface (12', 12") qui peuvent être commutées entre l'affichage d'informations dans un mode d'affichage à transparent dans un mode transparent.

5. Système d'affichage monté sur la tête (1, 1') selon la revendication 4, où le mode est contrôlé par le système de suivi (30) pour un mouvement de la tête et/ou des yeux d'un opérateur et/ou un geste est en outre configuré pour contrôler le mode.

6. Système d'affichage monté sur la tête (1, 1') selon l'une quelconque des revendications précédentes, où le mouvement de la portion d'affichage (11, 11', 11") est restreint pour maintenir la portion d'affichage (11, 11', 11") au moins partiellement dans le champ de vision direct (110) de l'opérateur.

7. Système d'affichage monté sur la tête (1') selon l'une quelconque des revendications précédentes, où le système d'affichage monté sur la tête (1') comprend deux portions d'affichage (11', 11"), chacune étant attribuée à un œil (100) de l'opérateur, où chacune des portions d'affichage (11', 11") est configurée pour être contrôlée indépendamment.

8. Système d'affichage monté sur la tête (1) selon l'une quelconque des revendications précédentes, où l'affichage monté sur la tête (10, 10', 10") est configuré pour couvrir le visage d'un opérateur.
